# EUROPÄISCHE PATENTSCHRIFT

(11) **EP 0 864 379 B1**
(45) Veröffentlichungstag und Bekanntmachung des Hinweises auf die Patenterteilung: **30.07.2003**
(21) Anmeldenummer: 98104335.9
(22) Anmeldetag: 11.03.1998
(51) Int. Cl.: B21B 35/14

(54) **Klemmverbindung zwischen einem Spindelkopf und einem Walzenzapfen**
Clamping connection between a spindle head and a roll neck
Raccord par serrage entre une tête de broche et un tourillon de cylindre

(30) Priorität: 14.03.1997 DE 19710554
(43) Veröffentlichungstag der Anmeldung: 16.09.1998
(73) Patentinhaber: SMS Demag AG, 40237 Düsseldorf (DE)
(72) Erfinder: Seidl, Karl-Heinz, 57271 Hilchenbach (DE); Marburger, Hans-Joachim, 57339 Erndtebrück (DE)
(74) Vertreter: Valentin, Ekkehard, Dipl.-Ing.

(56) Entgegenhaltungen:
- DE-A- 1 475 505
- DE-A- 3 139 652
- DE-A- 3 703 822
- DE-C- 3 231 752
- US-A- 3 702 200

## Beschreibung

Die Erfindung betrifft eine Klemmverbindung zwischen dem Spindelkopf einer Zahn- oder Kreuzgelenkspindel und dem Walzenzapfen einer Walze, bei der die Übertragung eines anstehenden Drehmomentes durch Formschluss zwischen Passflächen des Walzenzapfens und der Spindelhülse erfolgt, wobei zur Herstellung eines spielfreien Formschlusses zwischen den Passflächen in einen zwischen diesen ausgebildeten keilförmigen Aufnahmespalt federbelastete Keilplatten eingelegt sind.

Bei einer derartigen Verbindung sieht die übliche Ausbildung nach dem Stand der Technik vor, den Spindelkopf und einen zuordenbaren Walzenzapfen als Teile einer formschlüssigen Kupplung mit ineinandergreifbaren Kupplungs-Passflächen sowie mit zusätzlich einlegbaren Verschleißplatten mit Passungsspiel auszubilden. Beispielsweise erfolgt die Drehmomentübertragung Ober einen Flachzapfen. Das dabei vorhandene Passungsspiel ist für die Arbeitsbedingungen bei der Montage der Passungsteile vorteilhaft.

Andererseits ergeben sich zum Nachteil bei dieser bekannten Bauart - bedingt durch ungleichförmiges Drehmoment beim Walzbetrieb - ein relativ rapider Verschleiß der Verschleißplatten und sprunghafte Belastungsspitzen des Antriebsaggregates, die auch die Qualität des Walzgutes beeinträchtigen können.

Aus der US - A - 3 702 200 ist eine Klemmverbindung zwischen dem Spindelkopf einer Zahn - oder Kreuzgelenkspindel und dem Walzenzapfen einer Walze bekannt, wobei die Übertragung des anstehenden Drehmomentes durch Formschluss zwischen Passflächen des Walzenzapfens und der Spindelhülse erfolgt und wobei zur Herstellung eines spielfreien Formschlusses zwischen den Passflächen in einen zwischen diesen ausgebildeten keilförmigen Aufnahmespalt federbelastete Keilplatten eingelegt sind.

Die DE - A - 14 75 505 offenbart eine Schiebehülse für Zapfenkupplungen mit zwischen den Außenflächen des Zapfens und der Hülseninnenwand angeordneten Schiebekeilen, wobei die Schiebekeile paarweise einander gegenüberliegend auf achsparallelen Außenflächen des Zapfens und entsprechenden inneren Schrägflächen der Hülse aufliegen, unter der auch auf die Zapfeneinschiebeöffnung gerichteten Wirkung eines elastischen Druckorganes stehen und von an der Hülse angeordneten Elementen radial fest und axial gleitbar gehalten sind.

Aus der DE - A - 37 03 822 ist eine Klemmverbindung bekannt, bei der die Keilplatten ( Leiste ) meist flach ausgebildet sind, aber mindestens eine Keilform aufweist Diese Leiste kann längs der Achse der Spindelhülse ( Fassung ) verschiebbar sein. In diesem Fall wird sie so angeordnet, dass ihre geneigte Oberfläche zur Fassung eine entsprechende Keilform hat. Die Leiste ist hierbei an ihrem dem Walzenzapfenende entgegengesetzten Ende mit einer Axialdruckfeder versehen, die zwischen einem Anschlag der Leiste und der Fassung angeordnet ist.

Der Erfindung liegt die Aufgabe zugrunde, hier Abhilfe zu schaffen und eine wesentlich verbesserte Bauart für eine lösbare Verbindung zwischen dem Spindelkopf einer Zahn- oder Kreuzgelenkspindel und dem Walzenzapfen einer Walze anzugeben, welche beim Zusammenfügen der Kupplungsteile zuerst zwischen diesen genügend Spielräume ausbilden, die eine problemlose Montage ermöglichen, während im fertig montierten Betriebszustand ein absolut spielfreier Formschluss erreicht und aufrecht erhalten werden soll.

Zur Lösung der Aufgabe wird bei einer Verbindung der im Oberbegriff von Anspruch 1 genannten Art vorgeschlagen, dass in antipodischer Position zur Keilplatte relativ zur Rotationsachse zwischen der Bohrung der Spindelhülse und dem Walzenzapfen wenigstens eine Verschleißplatte einlegbar ist, der keilförmige Aufnahmespalt aus in axialer Richtung keilförmig verlaufenden Passflächen gebildet ist, wobei die Passflächen als Keilnuten des Walzenzapfens und der Spindelhülse ausgebildet sind und die Keilplatten an ihrem dem freien Ende des Walzenzapfens benachbarten Ende von Druckfedem in axialer Richtung beaufschlagbar und mit ihrem anderen Ende an einer Schulter des Walzenzapfens abgestützt sind.

Bei dieser Bauart erfolgt mit Vorteil eine Klemmung der miteinander zusammenwirkenden Kupplungsflächen beim Walzenwechsel von selbst. Federbelastete Keilplatten werden beim Einfahren der Walze axial und zugleich durch ihre Keilform radial verschoben und klemmen so den Walzenzapfen gegen seine Anlagefläche. Hierbei kann die Drehmomentübertragung nach wie vor formschlüssig, jedoch spielfrei über den Flachzapfen erfolgen.

Eine Ausgestaltung der Erfindung sieht vor, dass die Spindelhülse relativ zum Zahngelenk der Zahngelenkspindel axial verschiebbar ist und eine zentrale Druckplatte besitzt, mit welcher sie unter axialer Federbelastung durch einen im Zentrum der Zahngelenkspindel angordneten Bolzkopf gegen die Keilplatte aufschiebbar ist.

Durch Anordnung und Wirkung der Federn wird mit großem Vorteil beim Lösen des Walzenzapfens aus der formschlüssigen Verbindung mit dem Spindelkopf der Keil bzw. die Keilplatte in Achsrichtung bewegt und gibt somit die Formschlussverbindung frei.

Umgekehrt, beim Verbinden durch Einführen des Walzenzapfens in den Spindelkopf, drückt die Schulter die Keilplatte gegen die Federn, bis Klemmung und spielfreier Formschluss erfolgt sind.

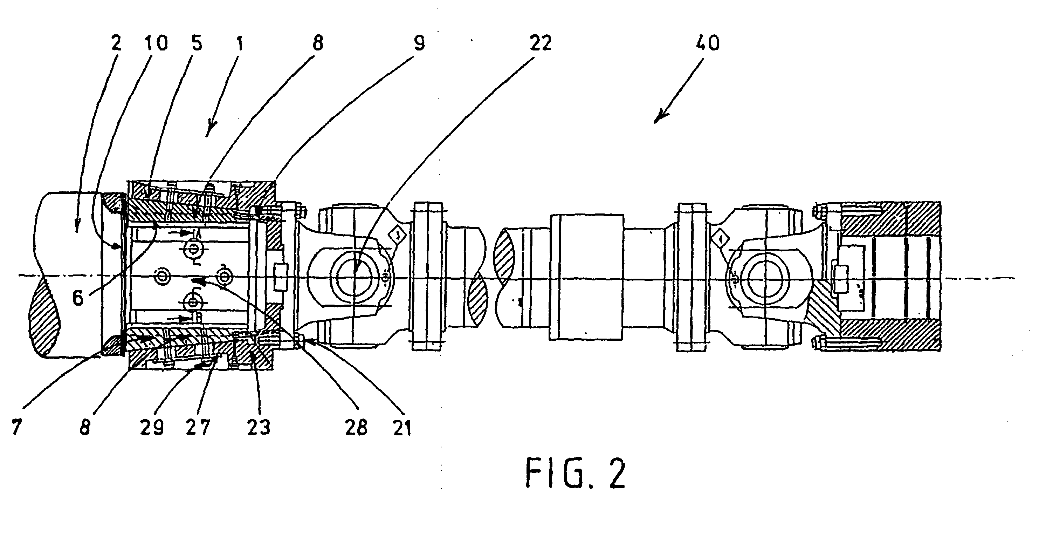

Weitere Ausgestaltungen der Verbindung sind entsprechend den Merkmalen der Unteransprüche vorgesehen. Einzelheiten, Merkmale und Vorteile der Erfindung ergeben sich aus der nachstehenden Erläuterung zweier in den Zeichnungen schematisch dargestellter Ausführungsbeispiele, wobei jedoch das Ausführungsbeispiel gemäss Figur 2 nicht unter den Schutzumfang der Patentansprüche fällt.

Es zeigen:
- Fig. 1: eine Klemmverbindung zwischen dem Spindelkopf einer Zahngelenkspindel und einem Walzenzapfen, im Schnitt,
- Fig. 2: eine Klemmverbindung zwischen dem Spindelkopf einer Kreuzgelenkspindel und einem Walzenzapfen, ebenfalls im Schnitt.

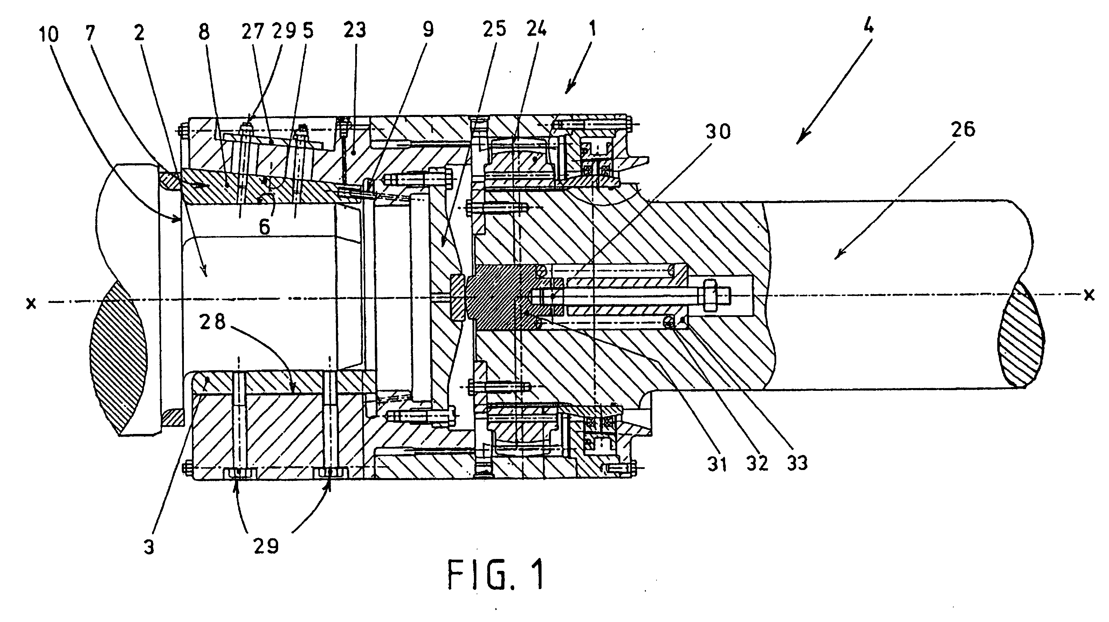

Bei der in Figur 1 gezeigten Klemmverbindung zwischen dem Spindelkopf (1) einer Zahngelenkspindel (4) und dem Walzenzapfen (2) einer Walze erfolgt die übertragung eines anstehenden Drehmomentes durch Formschluss zwischen Passflächen (5, 6) des Walzenzapfens (2) und der Spindelhülse (23). Zur Herstellung eines spielfreien Formschlusses zwischen den Passflächen (5, 6) sind in einen zwischen diesen ausgebildeten keilförmigen Aufnahmespalt (7) federbelastete Keilplatten (8) eingelegt. Die Keilplatten (8) sind an ihrem dem freien Ende des Walzenzapfens (2) benachbarten Ende von Druckfedern (9) in axialer Richtung beaufschlagbar an einer Schulter (10) des Walzenzapfens (2) abgestützt. Dabei weist die Spindelhülse (23) wenigstens eine innere Ausnehmung mit einer sich nach außen zu konisch öffnenden Passfläche (5) zur Aufnahme einer Keilplatte (8) auf. Bevorzugt kann die Klemmverbindung so ausgebildet sein, dass eine Keilplatte (8) in einen in axialer Richtung keilförmig verlaufenden, zwischen Keilnuten des Walzenzapfens (2) und der Spindelhülse (23) ausgebildeten Aufnahmespalt (7) einlegbar ist.

In erfindungswesentlicher Ausbildung ist die Spindelhülse (23) relativ zum Zahngelenk (24) der Zahngelenkspindel (4) axial verschiebbar und besitzt eine zentrale Druckplatte (25), mit welcher sie unter axialer Federbelastung durch einen im Zentrum der Zahngelenkspindel (4) angeordneten Bolzenkopf (31) mit Führungsbolzen (30) in einer Führungshülse (33) unter dem Druck der Feder (32) gegen die Keilplatte (8) aufschiebbar ist. Hierdurch wird bewirkt, dass beim Verbinden, d. h. bei der Einführung des Walzenzapfens (2) in die Spindelhülse (23), die Schulter (10) die Keilplatte (8) gegen die Federn (9, 32) drückt, bis Klemmung und spielfreier Formschluss erreicht sind.

Wie Fig. 1 weiter zeigt, ist in antipodischer Position zur Keilplatte (8) relativ zur Rotationsachse (x-x) zwischen Bohrung (28) der Spindelhülse (23) und Walzenzapfen (2) wenigstens eine Verschleißplatte (3) eingelegt. Dadurch, dass nunmehr durch Einführung der Keilplatten (8) ein spielfreier Formschluss zwischen den miteinander zusammenwirkbaren Elementen der Verbindung und somit auch mit der Verschleißplatte (3) hergestellt ist, wird der bisher rapide Verschleiß der Verschleißplatte (3) vermieden.

Dabei kann beim fertigen Zusammenbau nach erfolgter Klemmung durch die Keilplatte (8) sowohl diese als auch die Verschleißplatte (3) durch von einer Beilagplatte (27) überdeckte Langlöcher der Spindelhülse (23) hindurchgreifende Feststellschrauben (29) zusätzlich gesichert werden. Diese erleichtern auch die Montage beim Zusammenbau.

Wie die Schnittdarstellung der Anordnung des Spindelkopfes (1) der Zahngelenkspindel (4) an der Spindelwelle (26) erkennen lässt, ist die erfindungsgemäße Bauart der Klemmverbindung kompakt, zweckmäßig und montagefreundlich.

Eine weitgehend ähnliche Bauart einer Kreuzgelenkspindel (40) zeigt Figur 2. Bei dieser ist am Kreuzgelenk (22) die Spindelhülse (23) mittels Schrauben (21) befestigt. Analog der Funktion der Bauart gemäß Fig. 1 bei einer Zahngelenkspindel (4) erfolgt bei der Kreuzgelenkspindel (40) beim Walzenwechsel die Klemmung selbsttätig, indem die von den Federn (9) belasteten Keilplatten (8) beim Einfahren einer Walze axial und gleichzeitig durch ihre Keilform radial verschoben werden und infolgedessen den Walzenzapfen (2) selbsttätig bis zum spielfreien Formschluss der miteinander zusammenwirkenden Kupplungsteile verklemmen. Die Keilplatten (8) stützen sich dabei ebenfalls gegen die Schulter (10) des Walzenzapfens (2) ab. Auch bei dieser Ausführung werden die Keilplatten (8) zwischen den Passflächen (5, 6) im Spindelkopf (1) im keilförmigen Spalt (7) selbsttätig eingespannt. Dabei können sie mit den Feststellschrauben (29) festgesetzt werden. Mit der Ziffer (27) ist eine Beilagplatte für die Schrauben (29) und mit der Ziffer (28) die Bohrung der Spindelhülse (23) gekennzeichnet. Darüberhinaus sind mit der Ausführung gemäß Fig. 1 gleiche Elemente mit gleichen Bezugsziffern bezeichnet. Auch diese Bauart ist kompakt, übersichtlich und löst in optimaler Weise die eingangs gestellte Aufgabe; insbesondere wird ein automatischer Walzenwechsel nach der Erfindung ermöglicht.

## Patentansprüche

1. Klemmverbindung zwischen dem Spindelkopf (1) einer Zahn- oder Kreuzgelenkspindel (4, 40) und dem Walzenzapfen (2) einer Walze, bei der die Übertragung eines anstehenden Drehmomentes durch Formschluss zwischen Passflächen (5, 6) des Walzenzapfens (2) und der Spindelhülse (23) erfolgt, wobei zur Herstellung eines spielfreien Formschlusses zwischen den Passflächen (5, 6) in einen zwischen diesen ausgebildeten keilförmigen Aufnahmespalt (7) federbelastete Keilplatten (8) eingelegt sind, **gekennzeichnet durch** die Merkmalkombination, dass
a) in antipodischer Position zur Keilplatte (8) relativ zur Rotationsachse (x-x) zwischen der Bohrung (28) der Spindelhülse (23) und dem Walzenzapfen (2) wenigstens eine Verschleißplatte (3) einlegbar ist,
b) der keilförmige Aufnahmespalt (7) aus in axialer Richtung keilförmig verlaufenden Passflächen (5, 6) gebildet ist, wobei die Passflächen (5, 6) als Keilnuten des Walzenzapfens (2) und der Spindelhülse (23) ausgebildet sind,
c) die Keilplatte(n) (8) an ihrem dem freien Ende des Walzenzapfens (2) benachbarten Ende von Druckfedern (9) in axialer Richtung beaufschlagbar und mit ihrem anderen Ende an einer Schulter (10) des Walzenzapfens (2) abgestützt sind.

2. Klemmverbindung nach Anspruch 1, **dadurch gekennzeichnet, dass** die Spindelhülse (23) relativ zum Zahngelenk (24) der Zahngelenkspindel (4) axial verschiebbar ist und eine zentrale Druckplatte (25) besitzt, mit welcher sie unter axialer Federbelastung durch einen im Zentrum der Zahngelenkspindel (4) angeordneten Bolzenkopf (31) gegen die Keilplatte (8) aufschiebbar ist.

3. Klemmverbindung nach Anspruch 1 oder 2, **dadurch gekennzeichnet, dass** der bzw. den Keilplatte(n) (8) durch von einer Beilagplatte (27) überdeckte Langlöcher der Spindelhülse (23) hindurchgreifende Feststellschrauben (29) zugeordnet sind.

4. Klemmverbindung nach Anspruch 1, wobei eine Spindelhülse (23) mit einer Kreuzgelenkspindel (40) verbunden ist, **dadurch gekennzeichnet, dass** sowohl an der Spindelhülse (23) als auch am Walzenzapfen (2) in gleichen Umfangs-Winkelabständen wenigstens zwei in axialer Richtung keilförmig verlaufende Passflächen (5, 6) mit darin eingeschobenen Keilplatten (8) vorhanden sind.

## Claims

1. Clamping connection between the spindle head (1) of a toothed or cardan joint spindle (4, 40) and the roller spigot (2) of a roller, in which the transmission of torque which arises is effected by mechanically positive coupling between fit surfaces (5, 6) of the roller spigot (2) and the spindle sleeve (23), wherein for production of a play-free mechanically positive coupling between the fit surfaces (5, 6) spring-loaded wedge plates (8) are inserted in a wedge-shaped receiving gap (7) formed between these surfaces, **characterised by** the feature combination that
a) at least one wear plate (3) is insertable between the bore (28) of the spindle sleeve (23) and the roller spigot (2) in antipodal position with respect to the wedge plate (8) relative to the axis (x-x) of rotation,
b) the wedge-shaped receiving gap (7) is formed from fit surfaces (5, 6) extending in wedge shape in axial direction, wherein the wedge surfaces (5, 6) are formed as wedge grooves of the roller spigot (2) and the spindle sleeve (23) and
c) the wedge plate or plates (8) can be loaded in axial direction at the end thereof adjacent to the free end of the roller spigot (2) by compression springs (9) and is or are supported at the other end thereof against a shoulder (10) of the roller spigot (2).

2. Clamping connection according to claim 1, **characterised in that** the spindle sleeve (23) is axially displaceable relative to the toothed joint (24) of the toothed joint spindle (4) and has a central pressure plate (25) by which it is displaceable against the wedge plate (8) under axial spring loading by a bolt head (31) arranged in the centre of the toothed joint spindle (4).

3. Clamping connection according to claim 1 or 2, **characterised in that** fixing screws (29) engaging through slots, which are covered by a shim (27), of the spindle sleeve (23) are associated with the wedge plate or plates (8).

4. Clamping connection according to claim 1, wherein a spindle sleeve (23) is connected with a cardan joint spindle (40), **characterised in that** at least two fit surfaces (5, 6), which extend in wedge shape in axial direction, with wedge plates (8) inserted therein are present not only at the spindle sleeve (23), but also at the roller spigot (2) at the same circumferential angular spacings.

## Revendications

1. Raccord par serrage entre une tête (1) d'une broche d'un joint à denture ou à croisillon (4, 40) et le tourillon (2) d'un cylindre, dans lequel la transmission d'un couple de rotation engendré s'effectue par coopération de formes entre des surfaces d'ajustement (5, 6) du tourillon de cylindre (2) et de la douille de broche (23), et pour établir une coopération de formes sans jeu entre les surfaces d'ajustement (5, 6), des plaques en coin (8) chargées par des ressorts sont posées dans un intervalle de réception (7) en forme de coin réalisé entre lesdites surfaces, **caractérisé par** la combinaison des caractéristiques suivantes:
a) au moins une plaque d'usure (3) est susceptible d'être posée à l'antipode de la plaque en coin (8) par rapport à l'axe de rotation (x-x) entre le perçage (28) de la douille de broche (23) et le tourillon de cylindre (2),
b) l'intervalle de réception (7) en forme de coin est formé par des surfaces d'ajustement (5, 6) qui s'étendent en forme de coin en direction axiale, les surfaces d'ajustement (5, 6) étant réalisées sous forme de gorges en coin du tourillon de cylindre (2) et de la douille de broche (23),
c) la ou les plaques en coin (8) sont susceptibles d'être sollicitées en direction axiale par des ressorts de compression (9) à leur extrémité voisine de l'extrémité libre du tourillon de cylindre (2) et prennent appui à leur autre extrémité contre un épaulement (10) du tourillon de cylindre (2).

2. Raccord par serrage selon la revendication 1, **caractérisé en ce que** la douille de broche (23) est mobile axialement par rapport au joint à denture (24) de la broche (4) du joint à denture et possède une plaque de pression centrale (25) avec laquelle, en étant sollicitée axialement par le ressort, elle est susceptible d'être enfilée contre la plaque en coin (8) par une tête de goujon (31) agencée au centre de la broche (4) du joint à denture.

3. Raccord par serrage selon l'une ou l'autre des revendications 1 et 2, **caractérisé en ce que** des vis d'immobilisation (29) traversant des trous oblongs de la douille de broche (23) recouverts par une plaque auxiliaire (27) sont associées à la ou aux plaque(s) en coin (8).

4. Raccord par serrage selon la revendication 1, dans lequel une douille de broche (23) est reliée à une broche (40) du joint à croisillon, **caractérisé en ce qu'**il est prévu, aussi bien sur la douille de broche (23) que sur le tourillon de cylindre (2), au moins deux surfaces d'ajustement (5, 6) s'étendant en forme de coin en direction axiale à des distances angulaires périphériques égales et comportant des plaques en coin (8) enfilées dans lesdites surfaces.
